(19) Europäisches Patentamt
European Patent Office
Office européen des brevets

(11) **EP 1 919 122 A1**

(12) **EUROPEAN PATENT APPLICATION**

(43) Date of publication:
**07.05.2008 Bulletin 2008/19**

(51) Int Cl.:
**H04L 9/08** (2006.01)

(21) Application number: **06255597.4**

(22) Date of filing: **31.10.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK RS** (71) Applicant: **British Telecommunications Public Limited Company London EC1A 7AJ (GB)** | (72) Inventor: **The designation of the inventor has not yet been filed** (74) Representative: **Chabasseur, Vincent Robert BT Group Legal Intellectual Property Department PP C5A-BT Centre 81 Newgate Street London EC1A 7AJ (GB)** |

(54) **Quantum communication method and system between two user using two pairs of photons emitted by an independent laser source**

(57) The present invention relates to the exchange of information, in particular using quantum mechanically entangled particles. Information is exchanged between a first party and a second party, by: (i) generating a third party group of entangled particles; (ii) quantum mechanically entangling the particles from the third party group with a first particle, which first particle is in a state that contains information to be conveyed from the first party apparatus;(iii) quantum mechanically entangling the particles from the third party group with a second particle, which second particle is in a state that contains information to be conveyed from the second party apparatus; (iv) using the first party apparatus to perform a local measurement on at least one of the third party group of entangled particles such that the result of the measurement provides an indication of the information from the second party apparatus; and,(v) using the second party apparatus to perform a local measurement on at least a further one of the third party group of entangled particles such that the result of the measurement provides an indication of the information from the first party apparatus.

Figure 4

EP 1 919 122 A1

**Description**

The present invention relates to the exchange of information, in particular using quantum mechanically entangled particles.

Recent advances in the field of quantum communications and quantum information have involved the use of quantum bits of information (known as qubits) to transmit and store information in a different way to that set out in classical communication theory. One commercial application is a method known as quantum key encryption method, which allows high levels of security for communication between two parties due to the fact that an intercept can be detected as a direct consequence of quantum mechanical principles.

However, quantum key cryptography is effectively a one-way process, in which the sender sends information securely to a remote receiver; the receiving party is not normally required to reciprocate. If information has to be exchanged between the two parties, the use of quantum key cryptography in itself is only of partial value as normally it merely secures the individual communication channels

A further advance in quantum communication practice is the so-called method of quantum teleportation. This allows a specific state to be destroyed in one location and reconstituted in or "teleported" to a remote location using entangled particles. Entangled particles have the property that a measurement or other action on one of a group of entangled particles will have an effect on the other entangled particles of the group, even if the entangled particles are spatially dispersed. By acting on one of the entangled particles with an initial state that is to be teleported, it is possible to convey information to the other entangled particle such that the initial state can be recreated remotely at one of the other entangled particles. This process has been demonstrated experimentally.

According to the present invention, there is provided a method of exchanging information between at least a first party apparatus and a second party apparatus, including the steps of:

(i) generating a third party group of entangled particles;
(ii) quantum mechanically entangling the particles from the third party group with a first particle, which first particle is in a state that contains information to be conveyed from the first party apparatus;
(iii) quantum mechanically entangling the particles from the third party group with a second particle, which second particle is in a state that contains information to be conveyed from the second party apparatus;
(iv) using the first party apparatus to perform a local measurement on at least one of the third party group of entangled particles such that the result of the measurement provides an indication of the information from the second party apparatus; and,
(v) using the second party apparatus to perform a local measurement on at least a further one of the third party group of entangled particles such that the result of the measurement provides an indication of the information from the first party apparatus.

Because of the effects of quantum mechanical entanglement between the third party particles and the first particle, the state of the first particle and therefore the information contained in that state will influence the measurement performed using the second party apparatus on at least one of the third party particles. Likewise, the entanglement of the second particle influences the result of the measurement made using the first party apparatus on the other of the third party particles, allowing information to be exchanged between the first and second parties.

The invention will now be further described with reference to the following drawings, by way of example only, in which:

Figure 1 shows a prior art quantum teleportation system;
Figure 2 shows in more detail the prior art quantum teleportation system of Figure 1;
Figure 2a shows the effect of a 45˚ waveplate
Figure 3 illustrates the steps in a method of information exchange according to the present invention
Figures 3a-3e show in more detail the individual steps of Figure 3
Figure 4 shows a communication system for exchanging information between two parties according to the present invention;
Figure 5 is a flow chart showing steps involved in the operation of the system of Figure 4;
Figure 5a is a flow chart showing the steps in a calculation carried out by a party to obtain information conveyed by the other party;
Figure 5b is a flow chart showing an alternative sequence of steps to those.of Figure 5; and,
Figures 6, 7 and 8 show simulated results of the calculation of Figure 5a.

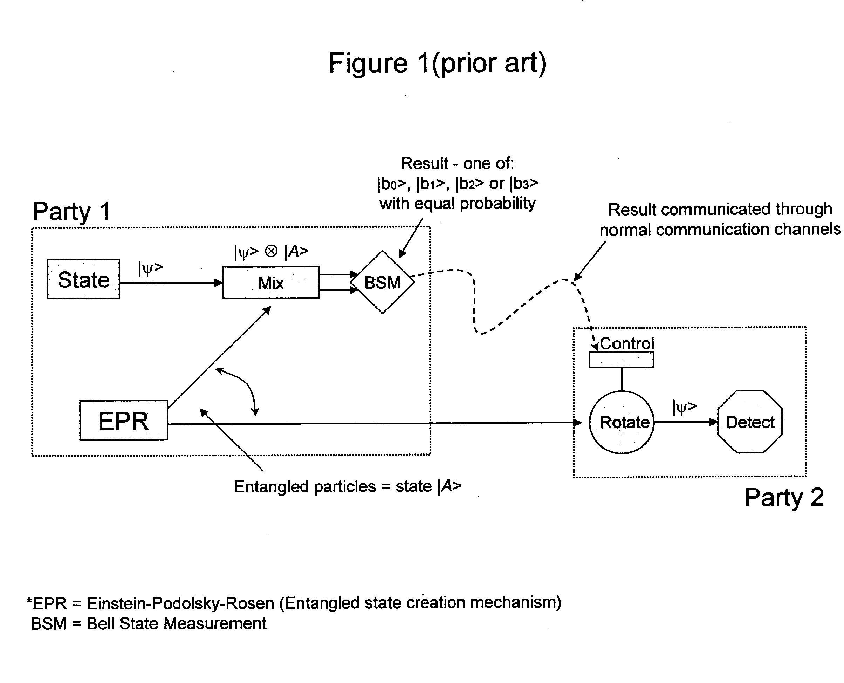

Figure 1 illustrates the basic principle of quantum teleportation, in which a sending party (party 1), in possession of a local particle in a quantum mechanical state |ψ>, wishes to convey the information contained in the state |ψ> to a receiving party (party 2).

A pair of entangled particles known as an EPR (Einstein-Podolsky-Rosen) pair is created either by the sending party or a third party. Such particles could be photons, atoms, electrons, molecules or other particles which can form a group whose physical state is described by a common quantum wavefunction. One particle is sent directly to the receiving party. The sending party (that has the state $|\psi>$ to send to the receiving party) receives the second entangled particle and acts on it with the state $|\psi>$ by causing its local particle and the received entangled EPR particle to mix such that their respective wavefunctions coalesce to form a single wavefunction. All particles are now themselves quantum mechanically entangled, including the EPR particle sent directly to the receiving party.

In order to teleport the state $|\psi>$ to receiving party, the newly formed entangled state is detected at the sending party. This detection carried out by performing a Bell State Measurement (BSM) on the local particle and the EPR particle at the second party. The effect of the Bell State Measurement is to cause the pair of particles being measured to collapse into one of four so-called Bell States, which Bell States each define a relationship between the particles of the measured pair without identifying the individual state of each particle. Thus, through a Bell State Measurement, a combined entangled state can be measured (as opposed to detecting their individual states).

The Bell State Measurement collapses the entangled wavefunction and as a consequence destroys the state $|\psi>$. The information derived from the Bell State Measurement is transmitted to the receiving party. The receiving party is now able to act on the particle that formed the other half of the initial EPR entangled state in an appropriate manner using the received Bell State information from the sending party, so that the state $|\psi>$ can be recovered.

One example of the process can be described mathematically as follows:

The state of the initial entangled particles $|A>$ can be described as:

$$|A>=\frac{1}{\sqrt{2}}\left(|0_1 0_2>+|1_1 1_2>\right) \qquad (1)$$

The subscripts indicate which particle is being described. This indicates that if one particle is measured in the '1' state, then the other will be in the '1' state also, and similarly if one of the particles is measured in the '0' state then the other particle will be in the '0' state. This interdependence is known as 'entanglement' and can exist between particles separated by great distance.

The distance over which entanglement persists will depend on the nature of the particles and their environment. Photons interact loosely with the environment and can travel a long way (particularly in a vacuum where thousands of km is possible - quantum encryption through fibre and air has been shown experimentally up to around 15km). For atoms and other 'solid' particles which interact more easily with the environment they need to be cooled and stored in magnetic seals - but they have the benefit of being able to hold and manipulate better than fleeting photons. Indeed it is possible to teleport a state from a photon into the state of an atom (say) and vice versa.

Until or unless an individual measurement on one or both of the particles takes place the state can only be described as a superposition of the two possibilities and it is not possible to infer or deduce the state of any individual particle without collapsing this entangled state. The state $|A>$ described in equation 1 is only an example of an entangled state and many alternative entangled states can be created.

Assume the state $|\psi>$ that party 1 wishes to transmit to party 2 can be expressed as:

$$|\psi>=\left(a|0>+b|1>\right) \qquad (2)$$

Here a and b are real values such that $|a|^2 + |b|^2 = 1$ (meaning that the probability that, when measured, the state will be either measured as a '0' or '1' is unity). Here, the particles as photons, and the state is a polarisation state relative to a reference plane.

Party 1 receives one particle of the entangled pair and allows its wavefunction and that of state $|\psi>$ to combine to form a single wavefunction. This combination can be expressed as:

$$\psi > \otimes \mid A > = [a \mid 0 > +b \mid 1 >] \otimes \frac{1}{\sqrt{2}}[\mid 0_1 0_2 > + \mid 1_1 1_2 >]$$

$$= \frac{1}{\sqrt{2}}[a \mid 00_1 0_2 > +a \mid 01_1 1_2 > +b \mid 10_1 0_2 > +b \mid 11_1 1_2 >] \qquad (3)$$

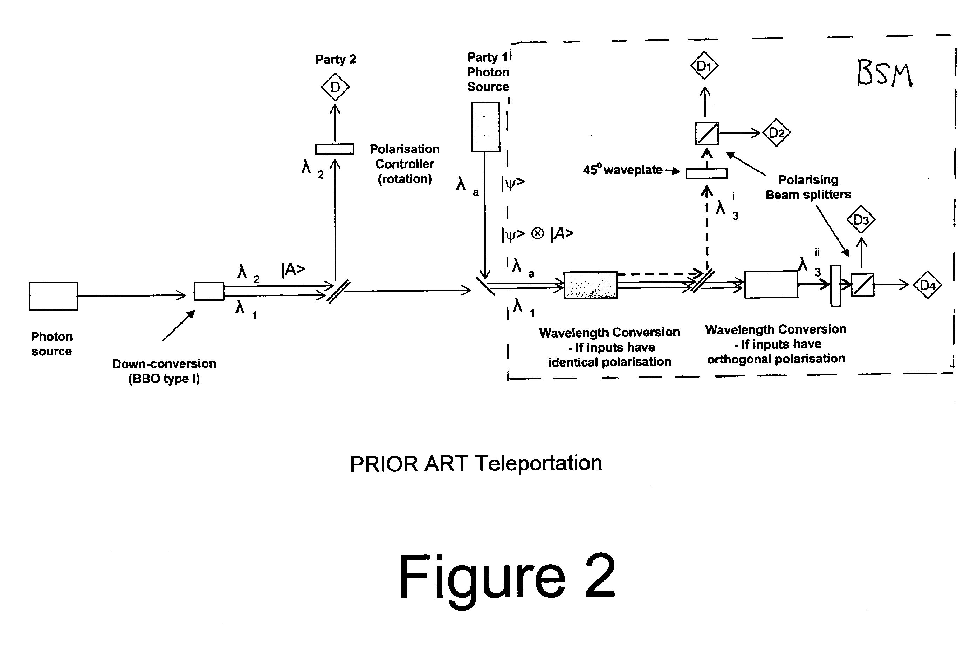

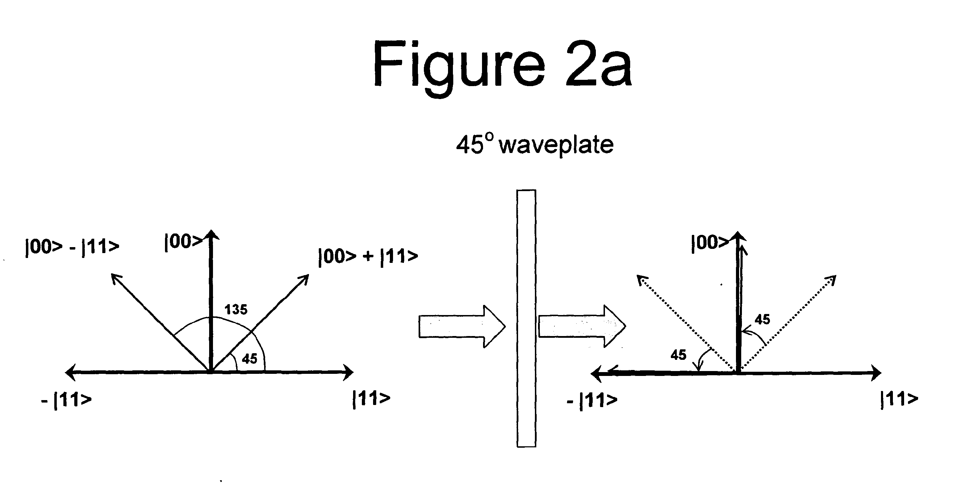

Subscript 1 represents the particle that remains with party 1 whereas subscript 2 represents the particle that is sent directly to party 2. Although in Fig 2 $\lambda_1$ acts on $\lambda a$, because $\lambda_1$ and $\lambda_2$ were created as an entangled pair as a result of being produced in a non-linear crystal (referred to in the figures as a BBO device) the combined state represents all three particles. By acting on one particle, one simultaneously acts on all particles that are entangled.

The symbol "$\otimes$" indicates a tensor multiplication signifying that the wavefunctions of the states have merged to form a superposition of 'entangled' states. Even though the act of mixing these states took place using only two particles, the third party is inextricably linked and is part of the overall state function even though it is not physically local to the mixing process.

Performing a classical measurement on any individual particle will only provide information pertaining to a single particle. For this reason a Bell State Measurement is made, which forces the overall state to collapse into one of a limited number of states that represent a superposition of individual 'classical' states. A Bell State Measurement determines which superposition of states that a system is in (after the measurement has been made) as opposed to a single state. (A classical measurement on a photon will only indicate whether it is in a '0' or '1' state. Looking at the equation 3 above, each individual particle has a 50:50 chance of being in a '0' or '1' state and therefore making a 'classical' measurement will tell you nothing about the combined state. One must perform a quantum measurement in order to gain access to information about the combined state.) Thus in this example a suitably designed BSM will force the state described in equation 3 to collapse into states in which the particles associated with $\lambda_1$ and $\lambda a$ are either parallel or orthogonal to each other without revealing their individual polarisation states. By avoiding making measurements to determine the polarisation state of each individual photon, one is able to maintain a degree of uncertainty regarding the overall state, which makes the teleportation possible. Therefore a BSM is not a classical measurement in the normal sense, although it obviously uses classical components and equipment.

The specific equipment and techniques that are required to perform Bell State Measurements will differ depending on the particles involved and the characteristics under investigation. In Figure 2, the photon polarisations are measured via a combination of non-linear materials and polarisation sensitive filters. For atoms, it is possible to examine exited degenerate states [see 'Long Distance, Unconditional Teleportation of Atomic States via Complete Bell State Measurements', S. Lloyd, M. S. Shahriar, J. H. Shapiro, P. R. Hemmer, Physical Review Letters, Vol 87, No 16, October 2001].

Mathematically the above state can be written in the form of four distinct Bell States or axes:

$$\mid \psi > \otimes \mid A > = \frac{1}{2}(a \mid 0_2 > +b \mid 1_2 >) \mid b_0 > + \frac{1}{2}(a \mid 1_2 > +b \mid 0_2 >) \mid b_1 >$$
$$+ \frac{1}{2}(a \mid 0_2 > -b \mid 1_2 >) \mid b_2 > + \frac{1}{2}(a \mid 1_2 > -b \mid 0_2 >) \mid b_3 > \qquad (4)$$

Here $\mid b_0 >$, $\mid b_1 >$, $\mid b_2 >$ and $\mid b_3 >$ are orthogonal Bell axes:

$$\mid b_0 > = \frac{1}{\sqrt{2}}(\mid 00_1 > + \mid 11_1 >) \qquad (5)$$

$$|b_1> = \frac{1}{\sqrt{2}}\left(|01_1> + |10_1>\right) \qquad (6)$$

$$|b_2> = \frac{1}{\sqrt{2}}\left(|00_1> - |11_1>\right) \qquad (7)$$

$$|b_3> = \frac{1}{\sqrt{2}}\left(|01_1> - |10_1>\right) \qquad (8)$$

Equation 4 indicates that the state of the particle that Party 1 has is dependent on the 'combined' state of the two particles that Party 2 has. Party 2 measures her two particles, but does not measure each particle individually (as mentioned above this reveals no information - either they will be in a '0' or '1' state with equal probability); rather she measures their relationship (with respect to polarisation in this example) with each other. $|b_0>$ indicates that if one of the particles is in the '0' state then the other is '0' and vice versa. On the other hand discovering a $|b_1>$ state indicates that if one particle is in the '0' state then the other is in the '1' state (and vice versa). The wavelength conversion units in Figure 2 are there to extract this relationship without measuring the particles directly. The polarising beam splitters beyond are there to distinguish between $|b_0>$ and $|b_2>$ and between $|b_1>$ and $|b_3>$. By making this measurement Party 2 destroys the two particles (normally turning photons into electrons in the photodetectors) and hence the three-body system is said to 'collapse' into a single body system (i.e. the particle that Party 1 has). On the act of measuring the system can only collapse into one of the four states $|b_i>$ (with equal probability - the multiplying factors for each potential state are equal (0.5)) and hence a single particle state system results. Thus if $|b_0>$ is measured then Party 1's particle must be in state 1/2 [$a|0> + b|1>$] which means that the probability that it is in the '0' state is determined by the factor $a$ - thus the probability of detecting a '0' or '1' is not equal. If Party 2 tells Party 1 (classically) the result of the Bell State Measurement then Party 1 can rotate his particle to perfectly match that of Party 2's original - hence achieving teleportation.

Explained in more detail, in Figure 2, if the incident particles on a wavelength conversion unit have matching polarisations then they will create a new photon with the same polarisation. The difference between $|b_0>$ and $|b_2>$ (i.e. the minus sign) represents a phase difference - difficult to measure directly, but as we shall see, has useful properties for manipulation. The difference between $|b_0>$ and $|b_1>$ is a difference in polarisation - this can be detected with the aid of polarisation filters. If the incident particles were orthogonal then they would pass on through the first unit into the second and create a new photon of a particular polarisation and a similar measurement is performed. In this way the exact polarisations are not measured, only their relative positions with respect to each other. Obviously noise will degrade the matching of polarisations, hence will produce errors or missed results.

By measuring the three particle state represented by equation 4, with respect to the Bell states, that is with respect to the axes $|b_0>$, $|b_1>$, $|b_2>$ and $|b_3>$, the state represented by Equation 4 will collapse into one of the Bell states with equal probability. With the information as to which Bell State was found, it is possible for party 2 to act on the second of the original entangled particles $|A>$, such that the state $|\psi>$ can be recovered. This process is known as quantum teleportation and has been reported experimentally in the literature. It has the benefit of allowing the sending of large amounts of information (an accurate and complete description of state $|\psi>$) by the sending of only two bits of classical information (the Bell State measurement result) and one half of a quantum entangled pair.

Figure 2 illustrates an apparatus that can be used to replicate the above procedure. For an experimental example of such a set-up see 'Quantum Teleportation with Complete Bell State Measurement', Y-H. Kim, S. P. Kulik, Y. Shih, Physical Review Letters, Vol. 86, No. 7, Feb 2001. Initially a single photon is produced by the photon source. In practice many such photons are produced as the act of quantum mechanically mixing and entangling photons is extremely inefficient and hence a large number of photons are used in order to ensure that teleportation can be observed. For the purposes of the following description, single, solitary photons are assumed unless indicated otherwise. However, a low density flux is not needed. In fact, high photon counts are better as they help overcome the noise present in the system. Nevertheless, it is easier to think of the system as a rapid succession of single photons as opposed to an ensemble of millions of photons all at the same time.

The photon from the photon (laser) source passes through a non-linear optical crystal that has the property that two (lower energy - longer wavelength) photons are produced. By blocking photons that are emitted from the crystal in certain regions and allowing others, it is possible to obtain two photons of different wavelengths ($\lambda_1$ and $\lambda_2$) that are entangled with respect to their polarisations [see for example Kwiat, P. G. et al. 'New high intensity source of polarization-entangled photon pairs'. Phys. Rev. Lett. 75, 4337-4341 (1995)]. An example of such a device or crystal is a Beta Barium Borate (BBO) type I 'down-conversion' crystal.

Once the two entangled photons have been created (they are entangled in that the polarisations are known to be fixed with respect to each other, but their actual polarisations are not known) they are then separated using a wavelength selective beam splitter (known as a 'dichroic beam splitter'). This device has the property that photons of wavelengths in one region of spectrum are transmitted through the device whereas photons in a different region of spectrum are reflected. By placing the dichroic beam splitter at an angle to the incident photons, the photons can be separated from their common paths and sent to disparate locations. The particles remain entangled even though they are separated.

One of the particles is then allowed to mix and become entangled with a particle created by party 1 $|\psi\rangle$. In the example shown in Figure 2 one of the previously entangled photons and a photon created by party 1 are incident on a standard 50:50 beam splitter. In practice the probability of photons mixing in this case is very small as the two incident photons must be in proximity with each other both spatially and temporally (they have to be in the same place at the same time) such that their individual wave functions overlap, and given the scales involved, this is difficult to achieve. In practice, this problem is overcome by producing large numbers of photons in order to produce a viable number of entangled photons: see 'Experimental Quantum Teleportation', Dik Bouwmeester, Jian-Wei Pan, Klaus Mattle, Manfred Eibl, Harald Weinfurter & Anton Zeilinger, Nature, Vol 390, 11 December 1997. Photons that do not mix and become entangled are lost and are regarded as noise in the system. (Mixing and entanglement in this description can be interchanged, as mixing as used herein is assumed to cause entanglement.) In the event that the wavefunctions of the two incident photons overlap and become entangled, a single entangled state is produced that can be expressed as $|\psi\rangle \otimes |A\rangle$ (equation 4). The overall state represents all three particles as one of the incident particles itself formed part of an entangled state of two particles. A BSM is then made on the two photons that were mixed in the beam splitter (see Figure 2). To achieve this measurement, these two photons are then passed through a device or crystal (for example a type I beta-BaB204 (or BBO) crystal or a BIBO (BiB306) crystal) that converts two wavelengths to form a single wavelength of higher energy (and hence shorter wavelength) provided that the polarisations of the incident photons are the same - known as sum frequency generation (SFG). In such a case a photon of wavelength $\lambda^i_3$ is produced (dotted line). The polarisation of this new photon is not known (because the actual polarisations of the incident photons were not known) and hence it can be described as being in a superposition of two polarisations (vertical and horizontal). This photon (if it has been created) passes through another dichroic beam splitter, and as it possesses a different wavelength than the incident photons is treated differently from photons that were of orthogonal polarisations and hence did not form $\lambda^i_3$. If the photon $\lambda^i_3$ is created then the state of the initial two photons must have been either $|b_0\rangle$ or $|b_2\rangle$ as the initial polarisation of the photons must have been the same. Recall that $|b_0\rangle$ and $|b_2\rangle$ represent the states in which if one photon has a polarisation represented by '0', then the other photon must have a polarisation of '0' and vice versa. In order to distinguish between the $|b_0\rangle$ or $|b_2\rangle$ states, the photon $\lambda^i_3$ is then passed through a quarter waveplate (or 45° waveplate) that rotates the incident polarisation of any photon by 45°. As shown in Fig 2a, the effect of rotating the superposition of states puts the photon into either a $|00\rangle$ or $|11\rangle$ state (detection of photons only examines the intensity (energy) of the photon and not the relative phase and hence any negative signs can be ignored). As a result the photon emanating from the quarter wave plate will either be in a vertical or horizontal polarisation. By putting a polarising beam splitter in its path the photon will either pass through if the polarisation of the photon is parallel to the polarisation orientation of splitter or will be reflected if it is orthogonal. Therefore the detector that registers a 'hit' will identify which of the bell states that the original photon was in ($D_1$ registering a hit represents the state $|b_0\rangle$ and $D_2$ registering a hit represents the state $|b_2\rangle$). If, however, no hit is registered (and assuming no noise), then the original photons could not have been in the same polarisation and hence not have produced a photon in the non-linear (BIBO) crystal $\lambda^i_3$. As a result these photons will have been transmitted through the dichroic beam splitter as their wavelengths would have been lower) and would have been passed through the type II BBO non-linear crystal. This device will produce a SFG photon ($\lambda^{ii}_3$) if the incident photons have polarisations are orthogonal to each other. This represents the $|b_1\rangle$ or $|b_3\rangle$ states. A similar equipment configuration exists to convert the superposition of states into a measurable state and hence determine which Bell state the photons were in.

Thus a complete Bell State Measurement has been made. Depending on which detector $D_1$, $D_2$, $D_3$ or $D_4$ registers a photon, the polarisation controller prior to the detector of photon $\lambda_2$ can be set such that the correct rotation of the incident photon can be made and hence the state $|\psi\rangle$ is created. Hence teleportation is achieved. A detector at party 2 beyond the polarisation controller exists so as to detect this final teleported state.

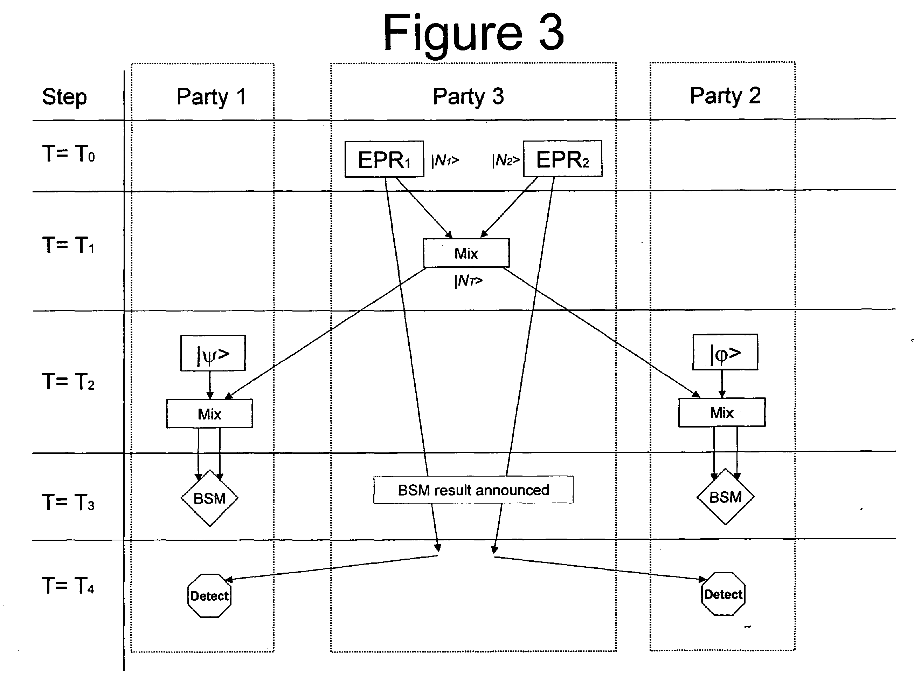

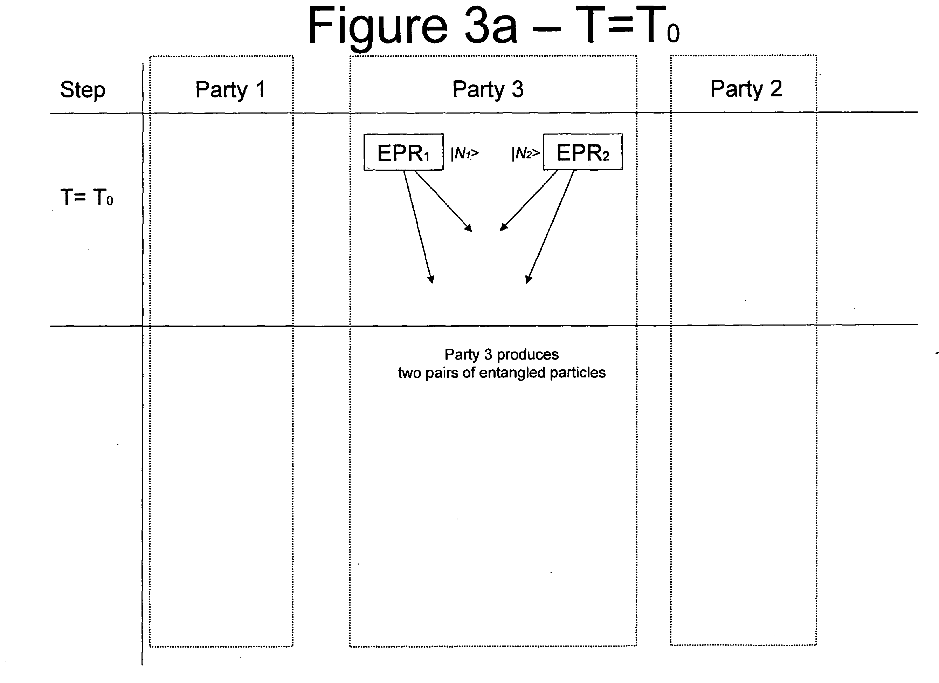

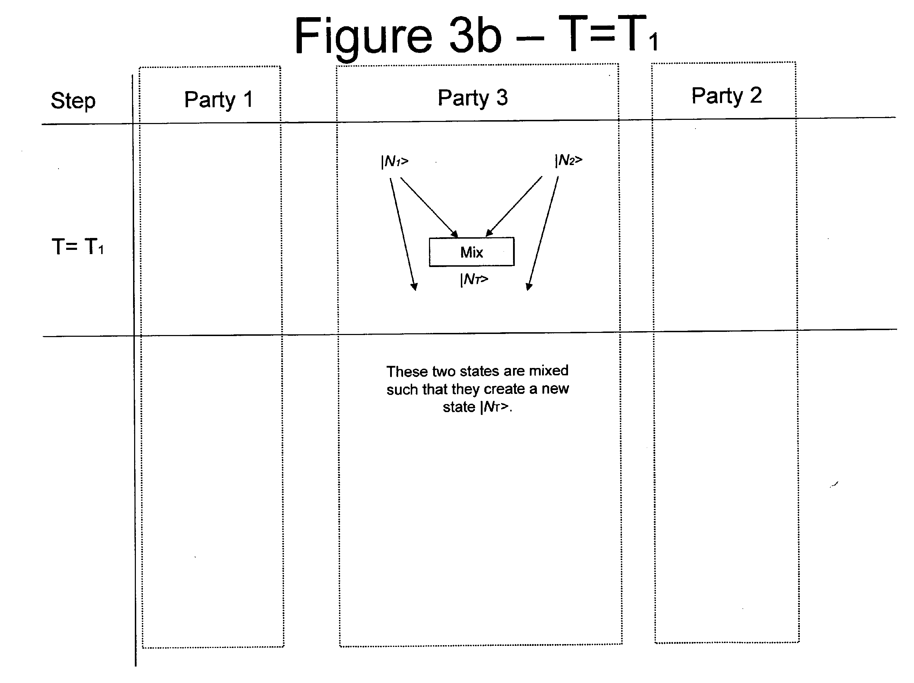

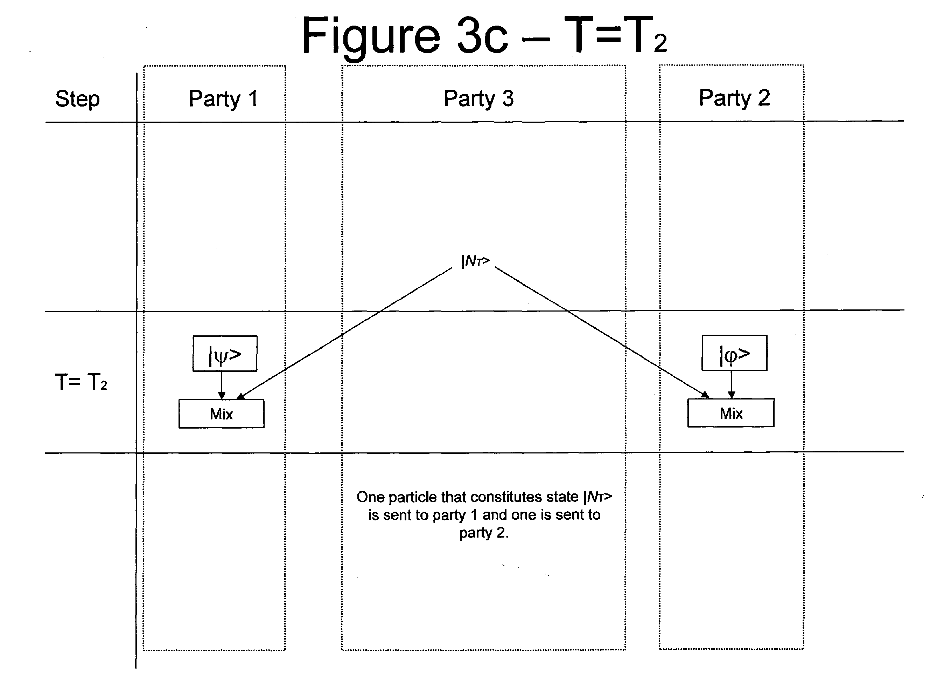

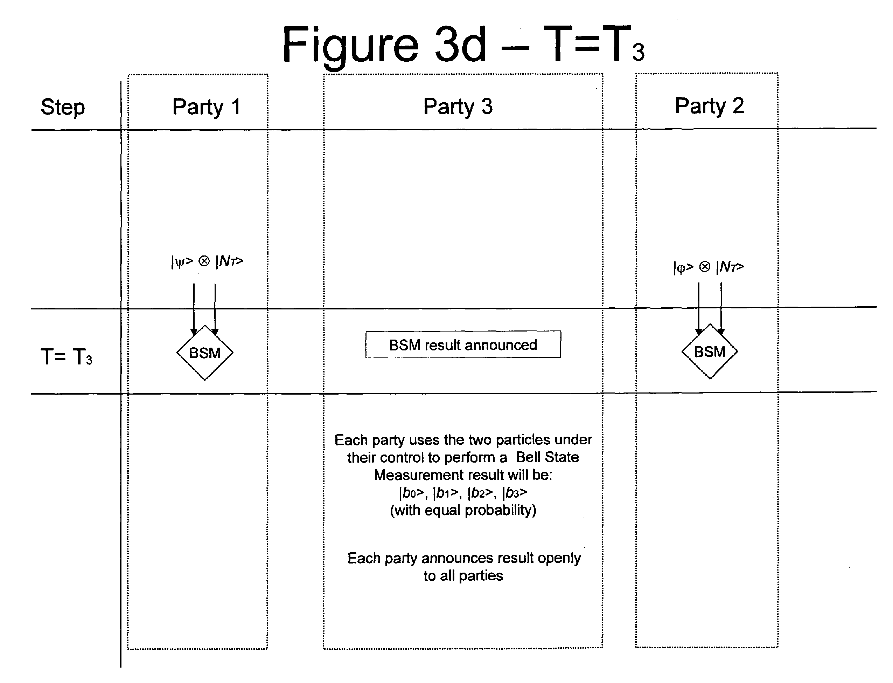

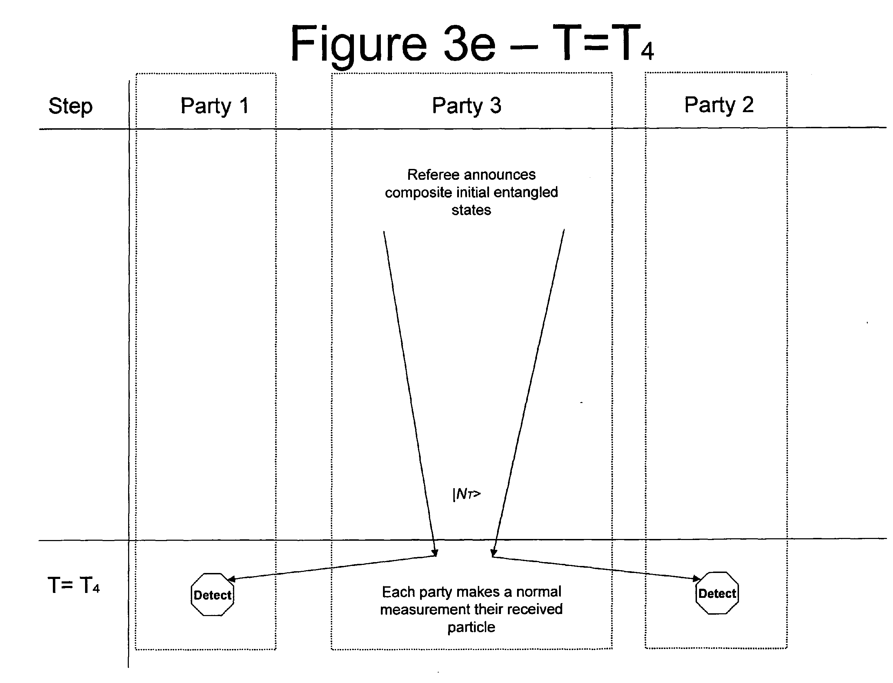

Figure 3 shows the steps in a method of information exchange according to the present invention. It illustrates how the principle of quantum teleportation can be extended to allow for information exchange between parties such that both sides acquire their required information as they send their own information.

The third (independent) party creates two pairs of entangled particles $|N_1>$ and $|N_2>$. In this embodiment (and without any loss of generality) these states can be expressed mathematically as:

$$| N_1 > = \frac{1}{\sqrt{2}} \left( | 0_1 0_2 > + | 1_1 1_2 > \right) \qquad (9)$$

and

$$| N_2 > = \frac{1}{\sqrt{2}} \left( | 0_3 1_4 > + | 1_3 0_4 > \right) \qquad (10)$$

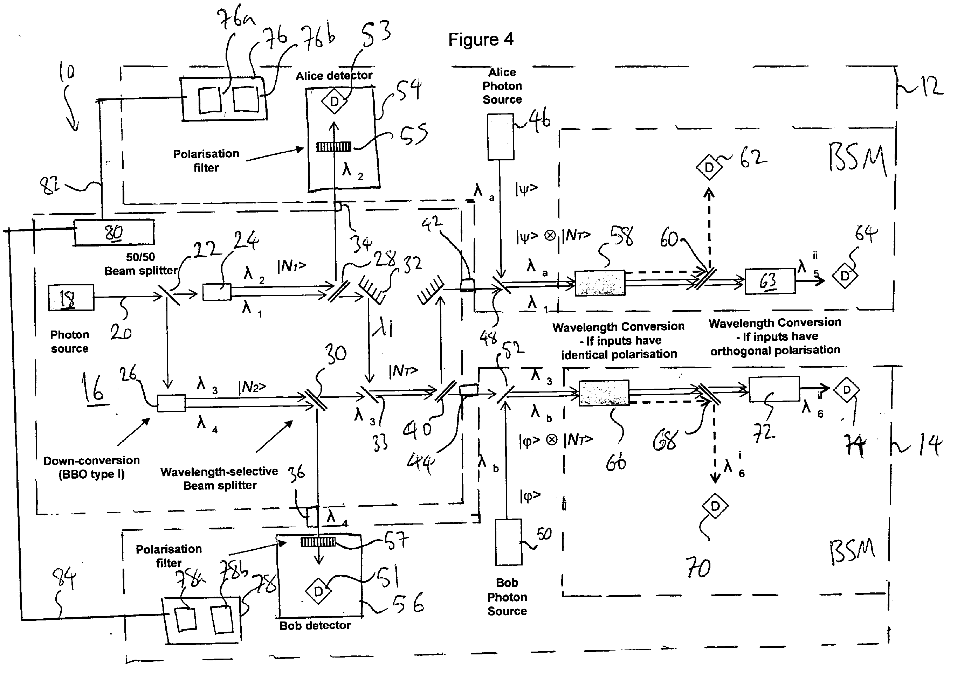

The subscripts of the states (1, 2, 3, or 4) indicate which particle is being referred to in Figure 4, and is associated with the wavelength indicated in Figure 4. For example, particle 1 is shown as $\lambda_1$ in Figure 4.

The third party first allows two of these particles (one from each entangled pair) to mix such that their wavefunctions coincide, thus creating a new single state that can be expressed as:

$$| N_T > = | N_1 > \otimes | N_2 > = \frac{1}{2} \left( | 0_1 0_2 0_3 1_4 > + | 0_1 0_2 1_3 0_4 > + | 1_1 1_2 0_3 1_4 > + | 1_1 1_2 1_3 0_4 > \right) \qquad (11)$$

The first two digits in the $|>$ notation represent the particles from state $|N_1>$ whereas the second two digits represent the particles from state $|N_2>$.

The third party now distributes the particles to party 1 and party 2 in the following way. One particle from $|N_1>$ is sent to party 1 and one particle from $|N_2>$ is sent to party 2. In this example we shall assume that the particle represented by the 1st digit is sent to party 1 and the third particle represented by the third digit is sent to party 2.

Party 1 wishes to send the state

$$| \psi > = a | 0 > + b | 1 > \qquad \text{where} \quad | a |^2 + | b |^2 = 1 \qquad (11a)$$

Similarly, Party 2 wishes to send the state

$$| \varphi > = c | 0 > + d | 1 > \qquad \text{where} \quad | c |^2 + | d |^2 = 1 \qquad (11b)$$

Both parties act on their received particle such that their wavefunctions merge to form a single state. The order in which this is performed is immaterial, hence in this example we shall assume party 1 acts first followed by party 2 - the final result is the same.

$$|\varphi> \otimes |\psi> \otimes |N_T> = \frac{1}{2}\begin{bmatrix} ca\,|\,0_b0_a0_10_20_31_4 > +ca\,|\,000010 > +ca\,|\,001101 > +ca\,|\,001110 > \\ +cb\,|\,010001 > +cb\,|\,010010 > +cb\,|\,011101 > +cb\,|\,011110 > \\ +da\,|\,100001 > +da\,|\,100010 > +da\,|\,101101 > +da\,|\,101110 > \\ +db\,|\,110001 > +db\,|\,110010 > +db\,|\,111101 > +db\,|\,111110 > \end{bmatrix}$$

(12)

The digits expressed in the |> notation represent the following particles (the subscripts in the first state are the same for all states, yet are omitted for clarity):

Digit 1: The particle that represents the state $|\varphi>$ created by party 2 (subscript $b$).
Digit 2: The particle that represents the state $|\psi>$ created by party 1 (subscript $a$).
Digit 3: The particle from $|N_1>$ that was sent to party 1 (first digit in $|N_T>$) (subscript 1).
Digit 4: The particle from $|N_1>$ that remains with third party, but which will ultimately be sent to party 1 (subscript 2).
Digit 5: The particle from $|N_2>$ that was sent to party 2 (third digit in $|N_T>$) (subscript 3).
Digit 6: The particle from $|N_2>$ that remains with third party, but which will ultimately be sent to party 2 (subscript 4).

As with the standard teleportation, one half of the particles of the initial state $|N_T>$ appear to be simply detected, but due to the mixing and entangling that takes place with their partners, the detection reveals more than one would, at first sight, expect (provided that the results of Bell State Measurements are known).
At this time each party can make a Bell State measurement on the combined state. The order in which these measurements take place does not matter (i.e. Party 1 can measure before or after Party 2 without altering the final result). There are sixteen independent result outcomes given that each individual Bell State Measurement can result in four possible outcomes. These outcomes are possible with equal probability. Without loss of generality assume party 1 makes a Bell State Measurement on the state consisting of particles represented by the subscripts a and 1, and the state collapses into a Bell State $|b_0>$. The remaining state can be expressed as:

$$\frac{1}{\sqrt{2}}\begin{bmatrix} ca\,|\,0_b0_20_31_4 > +ca\,|\,0_b0_21_30_4 > +cb\,|\,1_b0_20_31_4 > +cb\,|\,1_b0_21_30_4 > \\ + da\,|\,0_b1_20_31_4 > +da\,|\,0_b1_21_30_4 > +db\,|\,1_b1_20_31_4 > +db\,|\,1_b1_21_30_4 > \end{bmatrix}$$

(13)

Again, equation (13) could be written in terms of Bell States. Assume the measurement taken by party 2 (on the state consisting of particles represented by subscripts $b$ and 3) resulted in the state $|b_1>$. The final state can be expressed as:

$$ca\,|\,0_20_4 > +cb\,|\,0_21_4 > +da\,|\,1_20_4 > +db\,|\,1_21_4 >$$

(14)

or, in matrix notation:

$$\begin{pmatrix} ca \\ cb \\ da \\ db \end{pmatrix} \qquad\qquad (15)$$

Meaning that the probability that the two remaining particles are in the |00> state is given by $|ca|^2$, and similarly for the other states.

The full sixteen element matrix is shown in table 1. This table is correct for the initial entangled states created by the third party ($|N_1>$ and $|N_2>$). Clearly, if the initial entangled states are altered the final matrix changes, but the process and results remain valid.

**Table 1.**

| Bell State Measurement of Party 1 | | Bell State Measurement of Party 2 | | | |
|---|---|---|---|---|---|
| | | $\|b_0>$ | $\|b_1>$ | $\|b_2>$ | $\|b_3>$ |
| | $\|b_0>$ | $\begin{pmatrix} bc \\ ac \\ bd \\ ad \end{pmatrix}$ | $\begin{pmatrix} ac \\ bc \\ ad \\ bd \end{pmatrix}$ | $\begin{pmatrix} -bc \\ ac \\ -bd \\ ad \end{pmatrix}$ | $\begin{pmatrix} ac \\ -bc \\ ad \\ -bd \end{pmatrix}$ |
| | $\|b_1>$ | $\begin{pmatrix} bd \\ ad \\ bc \\ ac \end{pmatrix}$ | $\begin{pmatrix} ad \\ bd \\ ac \\ bc \end{pmatrix}$ | $\begin{pmatrix} -bd \\ ad \\ -bc \\ ac \end{pmatrix}$ | $\begin{pmatrix} ad \\ -bd \\ ac \\ -bc \end{pmatrix}$ |
| | $\|b_2>$ | $\begin{pmatrix} bc \\ ac \\ -bd \\ -ad \end{pmatrix}$ | $\begin{pmatrix} ac \\ bc \\ -ad \\ -bd \end{pmatrix}$ | $\begin{pmatrix} -bc \\ ac \\ bd \\ -ad \end{pmatrix}$ | $\begin{pmatrix} ac \\ -bc \\ -ad \\ bd \end{pmatrix}$ |
| | $\|b_3>$ | $\begin{pmatrix} -bd \\ -ad \\ bc \\ ac \end{pmatrix}$ | $\begin{pmatrix} -ad \\ -bd \\ ac \\ bc \end{pmatrix}$ | $\begin{pmatrix} bd \\ -ad \\ -bc \\ ac \end{pmatrix}$ | $\begin{pmatrix} -ad \\ bd \\ ac \\ -bc \end{pmatrix}$ |

Recall that the matrix notation can be expressed as a state notation as follows:

$$\begin{pmatrix} \alpha \\ \beta \\ \gamma \\ \delta \end{pmatrix} = \alpha\,|\,00> +\beta\,|\,01> +\gamma\,|\,10> +\delta\,|\,11> \qquad (16)$$

And note that $|\alpha|^2+|\beta|^2+|\gamma|^2+|\delta|^2 = 1$. In other words, the probability that the final state will be found in a state $|00>$ is $|\alpha|^2$, and similarly for $|01>$ and $|10>$ etc. The sign (+/1) of any value does not alter the result of the final measurement, hence there are effectively only four distinct matrix types indicated above:

Matrix 1:

$$\begin{pmatrix} bc \\ ac \\ bd \\ ad \end{pmatrix} \qquad (17)$$

Matrix 2:

$$\begin{pmatrix} ac \\ bc \\ ad \\ bd \end{pmatrix} \qquad (18)$$

Matrix 3:

$$\begin{pmatrix} bd \\ ad \\ bc \\ ac \end{pmatrix} \qquad (19)$$

Matrix 4:

$$\begin{pmatrix} ad \\ bd \\ ac \\ bc \end{pmatrix} \qquad\qquad (20)$$

All other matrices in the table 1 can be expressed as one of these four matrix types.

The first digit (left-most in the |> notation) represents the remaining particle (right most digit) of state $|N_1>$, whereas the second digit (right-most in the 1> notation) represents the remaining particle (right most digit) of state $|N_2>$.

Both parties can openly declare the results of their Bell State Measurements without revealing the inherent information that they wish to send. By performing the Bell State Measurements, both parties destroy the particle that represented the information that they wished to transmit and one of the initial entangled particles.

Once both sides have announced their measured (and potentially independently verified results using conventional monitoring methods), the third party can send out the remaining two particles and reveal the initial states of $|N_1>$ and $|N_2>$. That is, the third party can simply reveal that the initial states were formed such that the individual photons were either parallel or orthogonal (without knowing the exact orientation). This is sufficient for the parties to work out their results. The remaining particle from state $|N_1>$ is sent to party 1 and the particle from $|N_2>$ is sent to party 2.

With this information each party can make a single final measurement on the particle over which they have control. It is from this final measurement that the information that was to be received can be deduced.

For example, if the final state is (as described above):

$$ca|0_20_4> +cb|0_21_4> +da|1_20_4> +db|1_21_4> \qquad\qquad (21)$$

Party 1 controls the particle represented by the left digit in the |> notation (subscript 2), and party 2 the particle represented by the right digit (subscript 4). Therefore the probability that party 2 will detect a '0' is $|ac|^2 + |ad|^2 = |a|^2$, which is the value party 2 is seeking. The probability that party 1 will detect a '0' is $|ac|^2 + |bc|^2 = |c|^2$. This means that if the entire experiment is repeated a large number of times, the fraction of particles that are detected in the '0' state (for each time the above BSM results are obtained) gives you '$a$' and similarly for '$c$'.

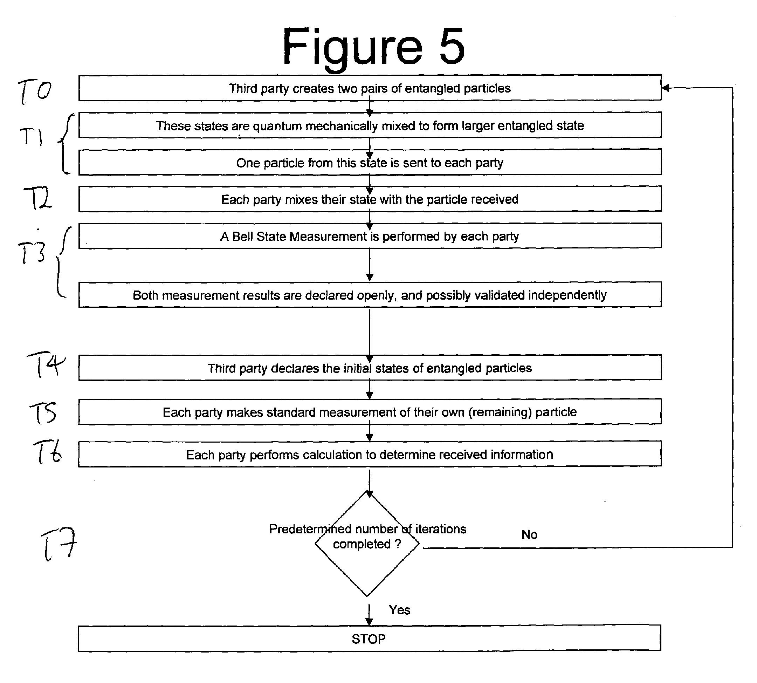

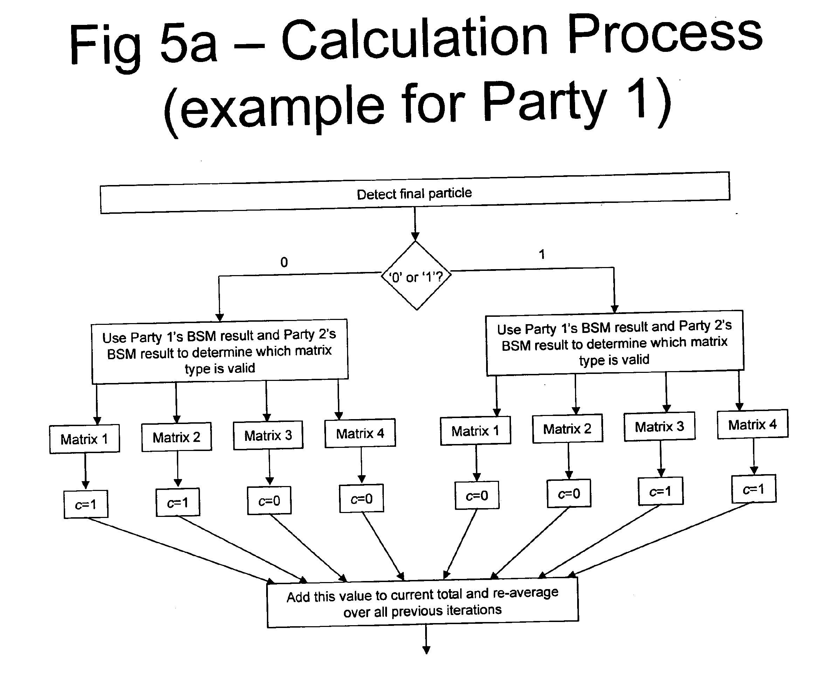

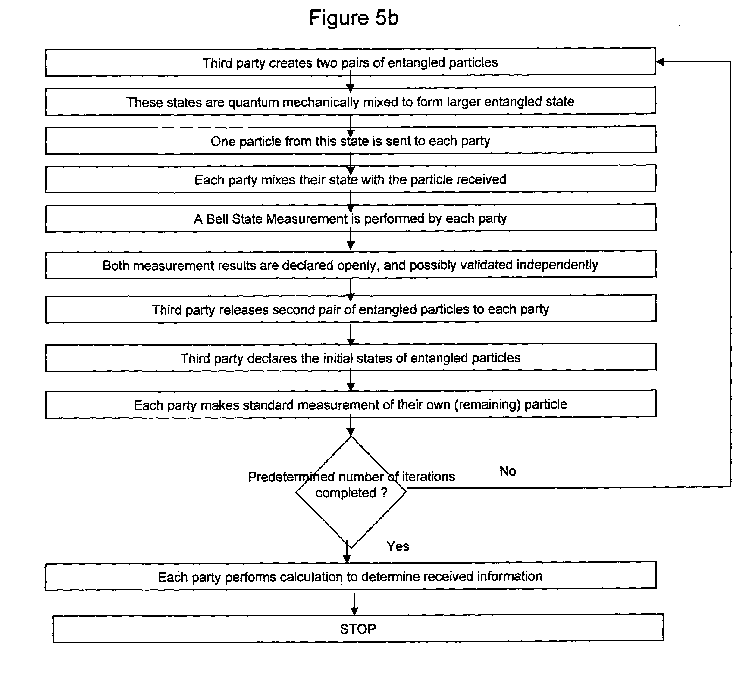

Therefore, given successive attempts following the procedure above, the values of $a$, $b$, $c$ and $d$ can be deduced given that each party will know one half of these parameters. Figure 5 describes the above process and Figure 5a describes the calculation of the required value in detail.

Figure 4 illustrates a specific experimental set up of such a process using the same apparatus as that used to describe the process of quantum teleportation. Other methods using photons, atoms, subatomic particles and larger objects could also be developed using these principles.

A stream of photons is passed through a beam splitter and impacts on two independent type I BBO down converters to create two pairs of entangled photons $|N_1>$ and $|N_2>$. One photon from each pair is separated using wavelength selective 'dichroic' beam splitters and merged to create a state $|N_T>$. Using dichroic beam splitters the photons that form this state are separated and sent to each party for mixing with their respective states $|\psi>$ and $|\varphi>$ (of wavelengths ($\lambda_a$ and $\lambda_b$ respectively). As before with quantum teleportation, a series of type I and type II non linear crystals are employed to create photons provided that the incident photons are of parallel or orthogonal polarisations. From there the individual states can be derived using polarising beam splitters.

Unlike the teleportation methodology, no rotation of the photons that are directly measured by party 1 or party 2 needs to be made. As will be seen, successive iterations of this process will allow each party to derive the information that they require from knowledge of their own Bell State Measurement, that which was declared by the other party and the result of their own direct measurement.

Figure 5 illustrates the steps in the process of information exchange and indicates how successive iterations of this process leads to the acquisition of the required states in a simultaneous manner (Figure 5a).

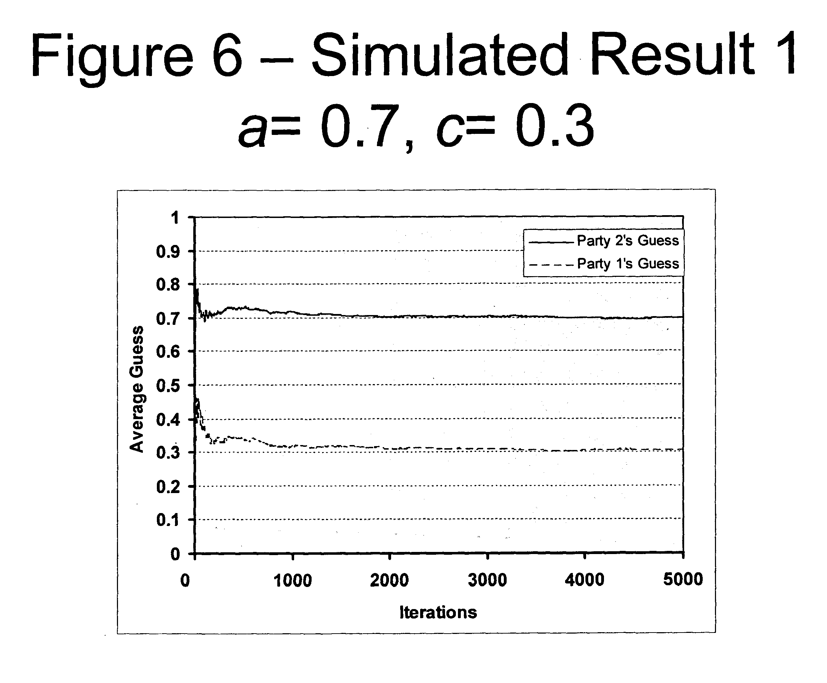

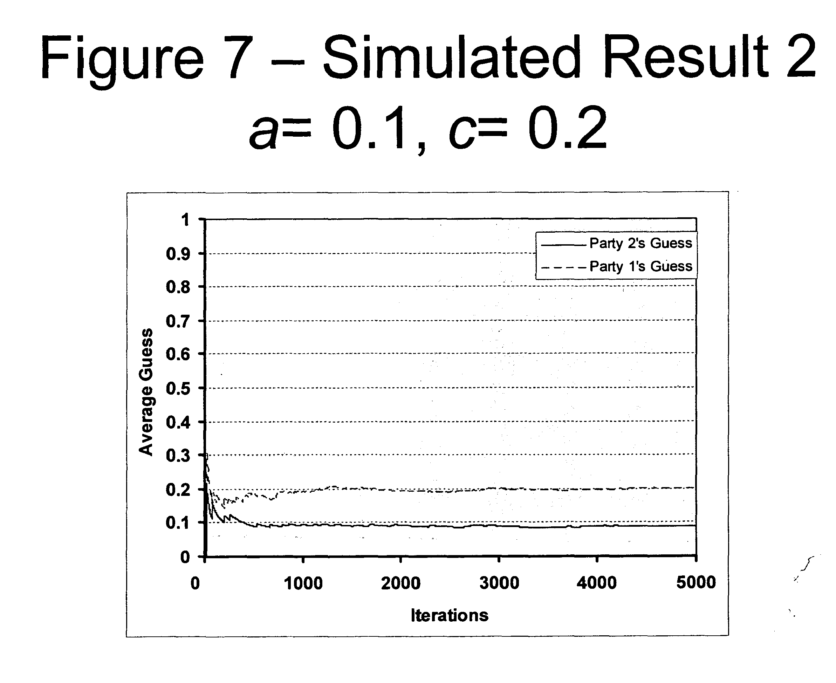

Figures 6 7 and 8 provide simulated examples of how the process yields the required information from successive iterations of this process. Figure 6 represents a result given a (the value party 1 wishes to send to party 2) = 0.7 and $c$ = 0.3. After a number of iterations the calculated average values approach the correct values. Figure 7 shows another simulation where the values to be sent are 0.1 and 0.2. Figure 6 shows that the precision obtained by this approach can be made arbitrarily small by the continued repetition of this process. Here the two values can be estimated within 0.02 given sufficient iterations. Using statistical analysis it is possible to evaluate the level of confidence that can be obtained from any number of iterations. This analysis will show that both parties will obtain the same confidence level at the same number of iterations regardless of number chosen; hence the information transfer is equally successful for both parties simultaneously. If the information is intercepted prior to final detection, then the results obtained by both parties will be incorrect - hence intermediate particle or state interception will give neither party an advantage.

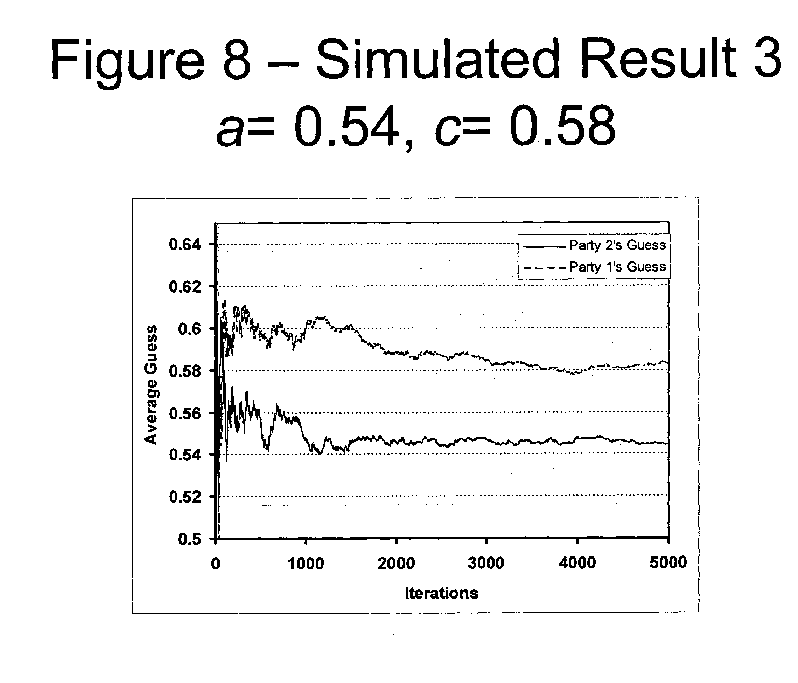

Each photon that arrives at the classical detectors can only be a '0' or a '1', but by adding this value to the previous result and then averaging, the overall probability of '$c$' is revealed (see graphs on Fig 6,7,8). At first the value fluctuates by a large amount due to statistical variations, but settles down once a statistically large sample is taken. The point is that the results of both parties settle at the same rate.

Additional extensions to this procedure can be introduced to ensure that the initial information transmitted is accurate and that the measurements are honestly declared. Such extensions could include the declaration that the initial value encoded into the state to be teleported was correct. Such a declaration need only be a single bit of information '1' for correct, '0' otherwise. Similar declaration that the BSM results were correct would ensure that all results are fair for all parties.

It is also possible to extend this process, in a similar method described by quantum cryptographic principles, to monitor the results declared by each party and deduce whether any interception of photons is taking place (eavesdropping) or that either party is being dishonest in their declarations.

Referring to figure 4 in more detail, there is shown a communications system 10 in which a first party station (Alice) 12 can exchange information with a second party station (Bob) 14 through the action of a trusted intermediate third party station 16. The third party station 16 has a photon source 18, here a laser, that generates a stream of photons 20. The photon stream is incident on a beam splitter 22, here a 50:50 beam splitter, and is split into two subsidiary beams which are respectively incident on a first down conversion crystal 24, and a second down conversion crystal 26. In the present example, the down conversion crystals are each a Beta Barium Borate (BBO) Type I crystal, which, as a result of photons at an incident wavelength from the photon source, provide pairs of entangled photons, each at a longer wavelength than that of the incident photons, the pairs being entangled with regard to their polarisation. Thus, the first down conversion crystal 24 provides entangled photons of wavelength $\lambda 1$ and $\lambda 2$, whilst the second down conversion crystal 26 provides photons that are entangled with respect to one another having wavelengths $\lambda 3$ and $\lambda 4$.

In the present example, $\lambda 1$ and $\lambda 3$ are the same wavelength, whilst $\lambda 2$ and $\lambda 4$ are also the same wavelength, but different from the wavelengths $\lambda 1$ and $\lambda 3$. The outputs $\lambda 1$ and $\lambda 2$ from the first down conversion crystal 24 impinge on a first angled dichroic being splitter 28 which separates light at the wavelengths $\lambda 1$ and $\lambda 2$ into two divergent beams. Likewise, the outputs $\lambda 3$ and $\lambda 4$ are incident on a second angled dichroic beam splitter 30, which separates the incident light into two divergent beams of wavelength $\lambda 3$ and $\lambda 4$ respectively. A mirror arrangement 32 is provided such that beams of wavelength $\lambda 1$ and $\lambda 2$ are caused to overlap and thereby mix at the beam splitter 33, where at least some of the photons become entangled with regard to polarisation, so as to provide a stream of entangled particles at wavelength $\lambda 1$, $\lambda 3$. The beam of entangled particles $\lambda 1$, $\lambda 3$ is separated according to wavelength using a second dichroic beam splitter 40, such that two divergent beams are produced, one beam having photons of wavelength $\lambda 1$, whilst the other beam has photons of wavelength $\lambda 3$. The beam $\lambda 1$ is passed to the first party station over an optical channel 42, whilst the beam $\lambda 3$ is passed to the second party station over a further optical channel 44.

Thus, the third party station provides four beams of photons that are entangled together in a collective state $|N_T\rangle$ represented by equation 11 above.

The photons provided by the third party station are quantised so as to be either in a "1" state of polarisation, or in a "0" state of polarisation, as indicated in equation 11, for example. As used in the embodiment of Figure 4, the "0" and "1" states refer to states of photon polarisation in which the photon polarisation axis is respectively parallel and orthogonal to a reference plane (clearly, the choice of reference plane is arbitrary).

The first party station 12 has a local photon source 46 that generates photons of wavelength $\lambda a$. In contrast to the photons provided by the third party station, the photons provided by the local photon source 46 have a polarisation whose axis is inclined relative to the reference plane an angle that need not be quantised, but instead can take any value: that is, any value within a continuous range (although to accommodate certain multi-level modulation formats, the angle may be quantised but normally with many more than just two levels, for example at least 10).

The angle of the photon from the first party photon source, that is, the values of a and b in equation 11a, represent an information symbol that the first party station 12 will convey to the second party station 14. In order that a user can select the value of the information symbol, the local photon source 46 includes selection means (not shown) for selecting or adjusting the angle at which photons from the local source are polarised.

The photons $\lambda a$ from the first party photon source 46 are directed to a beam splitter 48 arranged to also receive the third party beam $\lambda 1$ from the third party station. The beam splitter 48 acts to entangle at least some photons at $\lambda 1$ with those at $\lambda a$, and thereby form a beam of entangled pairs $\lambda 1$ and $\lambda a$. The combined beam is directed towards a Bell State Measurement (BSM) apparatus, where a Bell State Measurement is made on photons of wavelength $\lambda 1$ and photons of wavelength $\lambda a$.

In an analogous fashion to the first party station, the second party station 14 has a photon source 50 for generating photons at wavelength $\lambda b$, the photons $\lambda b$ having a polarisation axis that is angled such that the photons are in a state represented by equation 11b above. As was the case with the first party, the information symbol to be sent by the second party is contained in the angle of polarisation of photons from the local second party source 50 relative to the reference plane: that is, the information symbol to be conveyed is represented by the coefficients $c$ and $d$ of equation 11b. The photons from the second party source are mixed by a beam splitter 52 with photons at wavelength $\lambda 3$ received from the third party station. The entangled beam $\lambda 3$, $\lambda b$ is then directed to BSM apparatus where a BSM measurement is made of photons $\lambda 3$ and $\lambda b$.

Thus, the first party station receives two of the four entangled photons of the state $|N_T\rangle$ generated by the third party (see equation 11), whilst the second party station receives the other two of the four entangled photons. By mixing one of the received entangled photons with a locally generated photon containing the information to be conveyed, the second party creates an entangled state in which the locally generated photon is entangled with each of the four third party generated photons. Likewise, by entangling another of the four entangled photons generated by the third party with a locally generated photon, the second party creates an entangled state in which the locally generated photons $\lambda a$ and $\lambda b$ are not only entangled together, but also entangled with the four entangled photons from the third party station. Thus, a six particle entangled state is created as specified in equation 12 above. (Of course, each of the first and second party stations maybe distributed, such that the respective photon sources of each station are located remotely from other components of the station).

The BSM apparatus of the first party station includes a first wavelength conversion crystal, here a type I BBO crystal 58, which converts incoming photons at wavelengths $\lambda a$ and $\lambda 1$ into high energy photons at wavelengths $\lambda(i)5$ if the polarisation of the two incoming photons is aligned. If the polarisation of the incoming photons is not aligned, a higher energy photon is not produced, and the incident light passes through the crystal. Light from the first up conversion crystal 58 is directed towards a dichroic beam splitter 60 which is arranged to direct light at wavelength $\lambda(i)5$ to a first detector 62, and to direct light at the original wavelengths ($\lambda a$ and $\lambda 1$) to a second wavelength conversion crystal 63. The second wavelength conversion crystal 63 is a type II BBO crystal which produces a higher energy photon at wavelength $\lambda(ii)5$ when lower energy incoming photons have orthogonal polarisations to one another. Light from the second wavelength conversion crystal 63 is directed to a second detector 64. Thus, if light at wavelength $\lambda(i)5$ is directed to the first detector 62, it can be inferred that the photons of wavelength $\lambda a$ and $\lambda 1$ arriving at the BSM apparatus have parallel polarisation, and correspond to the bells states b0 or b2 (see equations 5 and 7). Conversely, if light at wavelengths $\lambda(ii)5$ is detected at the second detector 64, it can be inferred that an arriving photon pair is in the bell state b1 or b3 (equations 6 or 8 above). Each of the detectors is arranged to generate a receipt signal when a photon is detected, the receipt signal indicating which of the detectors the receipt signal originated from.

The BSM apparatus of the second party station 14 functions in a similar manner and has similar components to that of the first party BSM apparatus, namely: a first wavelength conversion crystal 66 for receiving input wavelengths $\lambda 3$, $\lambda b$; a dichroic beam splitter 68 for directing light to either one of a first detector 70 and a second wavelength conversion crystal 72, in dependence on the wavelength of light from the first wavelength conversion crystal 66; and, a second detector 74 arranged to detect an output at wavelength $\lambda(ii)6$ from the second wavelength converter 72. The BSM apparatus is thus arranged to make a Bell State Measurement of the photons of wavelengths $\lambda a$ and $\lambda 3$ entangled at the second party station.

In addition, the first and second party stations each have a respective classical detector system 54, 56, which includes respective polarisation means 55, 57 and a respective photo detector element 53, 51 for classically measuring the polarisation of photons at respective wavelengths $\lambda 2$ and $\lambda 4$. The detection system is classical in that here, it detects a signal particle state rather than a superposition state. However, the detection will determine whether incoming photons are in one of two states, that is, whether the photon is in a "1" state or a "0" state.

The third party station includes an electronic circuit 80 having a processor and a memory for performing a number of management functions. The electronic circuit 80 is opto-electronically coupled to each of the down conversion crystals 24, 26 so as to detect when entangled photons are created. This is useful because only a small fraction of photons from the photon source 18, cause entangled photons to be created by the crystals 24, 26: when entangled photons are generated, the crystals in addition generate a third photon at a predetermined wavelength, which is detected by the electronic circuit 80. In response to the predetermined wavelength being detected, the electronic circuit 80 generates an entanglement signal.

The electronic circuit has, stored in memory, state information relating to the polarisation of the entangled particles generated by the down conversion crystals 26, 24. The state information includes an indication, for each of the down conversion crystals 24, 26, of the polarisation relationship between entangled pairs provided by that crystal. Thus, the state information indicates whether photons at wavelength $\lambda 1$ and $\lambda 2$ have polarisation states that are orthogonal or parallel (without indicating what the polarisation state of each photon actually is). Likewise, the state information will include an indication of whether the photon pairs λ3 and λ4 are orthogonally polarised relative to one another or have polarisations that are parallel. Thus, the electronic circuit stores the information provided by equations 9 and 10 above. This information will normally be introduced into the electronic circuit when the third party station is set up, since it will be determined by the configuration of the crystals 24, 26, for example the crystal plane orientation of the crystals relative to the incident light.

Each party station has a respective calculation module 76, 78, each calculation module having a respective processor 76a, 78a, and a respective memory 76b, 78b. The calculation module of each party station 12, 14, is connected to the electronic circuit 80 of the third party station, by a respective conventional (that is classical) telecommunication link 82,84.

Considering the first party station 12 in more detail, the calculation module 76 is connected to the classical detector system 54, which provides a signal indicative of the polarisation states of received photons of wavelength λ2 (that is, indicating whether a photon is in a "0" state or "1" state). The first party calculation module 76 is also connected to each detector 62, 64 in order to be notified when a detector detects a photon. In response to receiving an entanglement signal from the electronic circuit 80 indicating that entangled particles had been formed at the down conversion crystals 24, 26, the calculation module 78 stores the value of the polarisation state determined by the classical detector 54, in association with an indication of which (if any) of the first and second detectors 62, 64 provided a receipt signal to indicate that a photon has been received.

The second party station is configured in an analogous fashion such that in response to an indication from the electronic circuit 80 that entanglement has occurred, the second party calculation module 78 stores (a) the polarisation state detected by the classical detector system 56, and (b) an indication of which of the first and second detectors 70, 74 provided a receipt signal.

The operation of the communications system 10 is illustrated in Figure 3, in which a plurality of steps occur in respective time intervals (which may overlap) denoted T1,T2,T3 etc..

At step T0 the third party station generates two pairs of entangled particles EPR1, EPR2 (in respective states N1, N2) which at step T1 are further entangled or "mixed" so as to form a state containing four entangled particles. When the creation of the two entangled pairs is detected at the third party station, the entanglement signal is transmitted to the first and second party stations. A four-particle entangled state may be formed a different way, but by first entangling two particles to form a pair, repeating this process to produce a second pair and then further entangling the pairs is a convenient way to limit the state to one which is a superposition of four possible permutations. Clearly, it is not important which particles from which initial pairs go to which party stations.

At T2, a respective locally generated state (containing the information to be conveyed between the first and second party stations) is entangled at each of the first and second party stations with a respective one of the photons from the previously entangled pairs. Here, the state to be conveyed by the first party station contains information represented by parameters *(a,b)* as indicated in equation 11a, whereas the state to be conveyed by the second party station contains information represented by parameters (*c,d*) as indicated in equation 11b.

At step T3, a respective BSM measurement is carried out at each party station on the photons respectively entangled at that party station in the previous step T2. The result of the BSM measurement carried out at each party station are then declared. To put into effect this declaration, the respective BSM result obtained is transmitted by the respective calculation module of each of the first and second party stations to the electrical circuit 80 of the third party station (over a respective one of the telecommunication links 82,84). In response to receiving the BSM results from each one of the first and second party stations, the electrical circuit 80 is configured to forward the result to the other of the first and second party stations, such that, in effect, the first and second party stations exchange BSM results. Alternatively, a telecommunication link (not shown) may be provided between the first and second party stations, so that these can exchange BSM results directly. As a result of step T3, each of the first and second party calculation modules will have stored therein the BSM results obtained at both the first and the second party stations.

At step T4, which may be carried out before or after step T3, the third party electrical circuit 80 is configured to transmit to each of the first and second party stations the state information indicative of whether each of the entangled pairs produced at the third party have parallel polarisation or orthogonal polarisation (in the present example, as shown in equations 9 and 10, one pair has parallel polarisations, whilst the other has orthogonal polarisations). That is, the third party station declares the initial entangled state of each pair of particles created at step T0.

At step T5, a standard measurement is made of at each party station of a respective one of the two remaining photons (the previous BSM measurements having destroyed four of the entangled photons). This is achieved using the respective classical detection system 54,56 at each of the first and second party stations.

A calculation is then performed at step T6 at each of the first and second party stations in order to estimate the information conveyed from the other of the first and second party stations. As part of this calculation, the first party calculation module retrieves one of a set of four previously stored state tables which allows the result of the classical measurement carried out at step T3 to be interpreted in terms the declared BSM results measured at step T3. The choice of table retrieved will depend on the state information transmitted by the third party station at step T4. Table 2 shows a table relevant to the present example. Likewise, the second party calculation module will retrieve the same table in the present example in order to perform an analogous calculation as that of the first party calculation module. As a result, an estimate is obtained at each party station of the information to be conveyed by the other party station.

At step T7, a decision is made as to whether a pre-agreed, that is, predetermined number of iterations has been reached. If so, the process terminates, and the value estimated by each party is assumed to correct (to within an acceptable error) and the information between the parties has successfully been exchanged. If the estimate is not considered sufficiently accurate, another cycle of the process is initiated, and steps T0 to T6 are repeated.

In more detail, a respective routine is performed at each one of the first and second party stations to estimate the values to be conveyed by the other of the first and second party stations. Considering the second party station for simplicity, the second party calculation module performs the following steps each time an entanglement signal is received from the third party circuit:

(i) a receipt counter is incremented;

(ii) a BSM measurement is made on an entangled photon pair comprising the locally generated photon and a photon from the third party station; that is, if a receipt signal is received from one of the first or second down conversion crystals 66,72, the receipt signal is assumed to indicate that the entangled photon state has collapsed into a state in which either the measured photons are of parallel (P) or orthogonal (O) polarisation to one another;

(iii) the received BSM result from the other party, that is, the first party is stored;

(iv) the signal provided by the classical detection system 54 is captured and interpreted as indicating that a photon of polarisation in a state "1" or state "0" has been detected;

(v) in dependence on the state information received from the third party, a state table, in this example Table 2 is retrieved;

(vi) the polarisation state (P or O) resulting from the BSM measurement is recorded in association with the classical measurement made by the classical detection system 54 is associated with either the value $a$ or the value $b$ according to Table 2. Recall that from equation 11a $|a|^2 + |b|^2 = 1$, hence the value $a$ is determined from a detection associated with the value $b$. After a plurality of increments, the number of increments associated with the value $a$ $(N\_a)_a$ is summed along with the calculated values of $a$ from the increments associated with the value of $b$ $(N\_a)_b$. Hence the required value of $a$ is obtained according to $a = [(N\_a)_a + N\_a)_b]/T$, where T is the total number of increments.

**Table 2**

| Result of BSM measurement Orthogonal/Parallel | | Value describing photon state in equations 11a,11b associated with result of classical measurement | | | |
|---|---|---|---|---|---|
| Party 1 | Party 2 | Party 1 | | Party 2 | |
| | | "0" | "1" | "0" | "1" |
| P | P | $c$ | $d$ | $b$ | $a$ |
| P | 0 | $c$ | $d$ | $a$ | $b$ |
| O | P | $d$ | $c$ | $b$ | $a$ |
| O | O | $d$ | $c$ | $a$ | $b$ |

An iteration of the routine is carried out until the estimates obtained at step (vi) are deemed sufficiently accurate. When this occurs, the values for $a$ and $b$ are stored as the final values and the communication is deemed completed. Each party can then transmit different values by each adjusting their local photon source 46,50 to generate photons at a different angle of polarisation relative to the reference plane: that is, so as to generate different values of $a,b,c$ and $d$.

The first party calculation module performs an analogous routine to that of the second party calculation module, and derives an estimate of the values $c$ and $d$ conveyed by the second party station. With an increasing number of iterations, the accuracy of the communication increases as the estimated values converge to the intended values. This is illustrated in Figures 6, 7 and 8 which show simulated results for various values of $a$ and $c$.

Importantly, each iteration of the routine is carried out synchronously at the first and second party stations, since each iteration is initiated by a common entanglement signal from the third party station. Consequently, the statistical accuracy to which each party obtains the values from other party will be the same for each party, and will increase in the same way with each iteration for each party. This can be seen in Figures 6, 7 and 8, where each party's "guess" or estimate converges towards the true values in the same way (taking into account the random nature of each individual reading from the classical measurement systems).

The calculation performed by each calculation module can be alternatively be described with reference to Table 3 and Figure 5a, the matrices 1-4 being defined in equations 17-20 respectively. In Figure 5a, a calculation performed at the first party calculation module is illustrated, where the value c from the second party station is estimated.

**Table 3**

|  |  | Party 2 |  |
|---|---|---|---|
| Party 1 |  | Parallel | Orthogonal |
|  | Parallel | Matrix 1 | Matrix 2 |
|  | Orthogonal | Matrix 3 | Matrix 4 |
|  |  |  |  |

In the situation described above, the third party station declares in each iteration the composite state (eqn 9 and 10). This is appropriate if the initial composite states are changed at the third party station every iteration (for example to change the composite states, the down conversion crystals 24,26 and optionally the photon source 18 may each be provided with mechanical adjustment means for adjusting the orientation of the beam from the source 18, and/or a plurality of sets of crystals may be provided). However, in a simpler arrangement, the initial composite state (eqn 9 and 10) remains the same, and it is not necessary for the third party station to declare this state at each iteration. Instead, the third party may declare this state after the predetermined number of iterations has been completed, as shown in Figure 5b.

In such a situation, the first and second party calculations modules will each be configured to store the values from their respective classical measurement systems, and, only after the agreed number of iterations have been performed, associate each stored measurement value with the values $a$ or $b$ in the case of the first party calculation module, or values $c$ or $d$ in the case of the second party calculation module. Once the measurement values have been associated, the number occurrences each is associated with an $a$ or $b$ value can be used to evaluate $a$ and $b$ (and $c$ and $d$) as explained above.

Once advantage in the third party station announcing the composite state (state information) after the predetermined number of iterations has been completed is that this will make it more difficult for one of the parties to determine the extent to which its estimate is accurate, making it less likely that any one party will cease to continue the iterations because it has determined its results are sufficiently accurate before the predetermined number of iterations are complete: as can be seen from Figures 6-8, the accuracy with which each party can estimate its results will be to some extent random and will not always be the same for both parties.

The number of agreed iterations will be determined before the third party creates the two entangled pairs (step T0 in Figure 5). The number of iterations can be deduced beforehand for a given accuracy. For example if the parties wish to work out values to a single decimal place and require 95% confidence then 1000 iterations or more may be required.

Instead of the third party transmitting the final photons ($\lambda$2 and $\lambda$4) to the respective first and second party stations for a detection by the classical detection systems, the classical measurements of these particles could instead be performed at the third party station, and the results (rather than the photons themselves) be transmitted. However, it is preferred that the third party station transmit the final particles because this makes it easier to detect eavesdropping. For example, by sending the final particle it is possible for the third party to select a number of random subset of iterations and demand the result of the second particle measurement from party 1 and party 2. If an eavesdropper had interfered with the particle enroute, the result detected would be altered (using the same principles and mechanisms as those that apply to quantum encryption).

In the embodiments above, the third party may change the states |N1> and |N2> transmitted before the information exchange between the parties (which is exchange is gradual, and is based on a plurality of incremental information transfers, each increment improving the statistical certainty with which each party receives information). Creating initial entangled states (with photons) requires using special crystals and therefore the initial state tends to be stable over time. If the initial states are not changed, this makes it more likely that at some point one or other of the parties will deduce the initial states and use this information to their advantage. To reduce the likelihood of this occurring, the third party may have a plurality of crystal type devices that can create entangled particles with different properties. The third party can then employ these devices selectively, for example randomly, at intervals ranging from each iteration at one extreme to once per each information transfer at the other, and any intermediate number in between. Altering initial states frequently is more complex but more secure than keeping the initial states constant.

As will be seen from the above description, the embodiments provide a convenient form of information exchange using a system of coupled Quantum Teleportation.

The present embodiments provide a methodology whereby information can be exchanged between parties such that information transfer is more secure from third party interception (in that it is detectable). It also ensures that correct information recovery is dependent on information transmission from all parties. All parties determine their information in step; if one party fails to send information, this is detectable and hence it can be arranged that no party receives any information. Additional extensions to this approach can be made such that open announcements that the information transmitted was correct so as to allow assured information transfer - all parties receive correct information at the same time. One benefit of such a scheme is to provide an incentive for all protagonists to participate in the information transfer process honestly.

The process is initiated by an independent party that generates a two pairs of entangled particles. These two pairs are themselves mixed to create a new state that entangles all four particles. One particle from each of the original pairs of entangled particles is sent to the two parties. Following the principles of quantum teleportation, each party acts on one of the received particles with the state that they wish to transfer to the other party and performs what is known as a 'Bell State Measurement' in which a measurement of the combined attributes of the mixed particles is made as opposed to measuring the states of the individual particles directly. The results of such a measurement are openly declared by both parties (possibly after independent verification). Once these results have been announced the final measurement of the other particle in each party's possession is carried out. However, information cannot be transferred until the independent party declares the exact nature of the initial pairs of entangled particles. Once this has been declared both sides can deduce the state the other party wished to transfer (given successive iterations of this technique).

## Claims

1. A method of exchanging information between at least a first party apparatus and a second party apparatus, including the steps of:

   (i) generating a third party group of entangled particles;
   (ii) quantum mechanically entangling the particles from the third party group with a first particle, which first particle is in a state that contains information to be conveyed from the first party apparatus;
   (iii) quantum mechanically entangling the particles from the third party group with a second particle, which second particle is in a state that contains information to be conveyed from the second party apparatus;
   (iv) using the first party apparatus to perform a local measurement on at least one of the third party group of entangled particles such that the result of the measurement provides an indication of the information from the second party apparatus; and,
   (v) using the second party apparatus to perform a local measurement on at least a further one of the third party group of entangled particles such that the result of the measurement provides an indication of the information from the first party apparatus.

2. A method as claimed in claim 1, wherein a first quantum state measurement is made on a combined state of the particles entangled in step (ii), and a second quantum state measurement is made on a combined state of the particles entangled in step (iii).

3. A method as claimed in claim 2, wherein the result of the first quantum state measurement is transmitted from the first party apparatus to the second party apparatus, and wherein the result of the second quantum state measurement is transmitted from the second party apparatus to the first party apparatus.

4. A method as claimed in claim 2 or claim 3, wherein the results of the first and second quantum state measurements are each used by each one of the first and second party apparatus in order to obtain an indication of the information conveyed from the other of the first and second party apparatus.

5. A method as claimed in any of claims 2 to 4, wherein each quantum state measurement is a Bell State Measurement.

6. A method as claimed in any of the preceding claims, wherein the indication of the information from the first party and second apparatus in steps (iv) and (v) is a statistical indication.

7. A method as claimed in any of the preceding claims, wherein steps (i) to (v) are repeated a plurality of times, and wherein each one of the first and second party apparatus is configured to estimate the information transmitted from the other of the first and second party apparatus in dependence on the distribution of the results of the local measurement performed by the respective first and second party apparatus.

8. A method as claimed in any of the preceding claims, wherein the particles are photons.

9. A method as claimed in any of the preceding claims, wherein the third party particles are photons having a polarisation this is quantised in one of two discreet states, and wherein the first and second particles are each photons having a polarisation that can take an orientation that can take a value in a range that is at least quasi continuous.

10. A method as claimed in any of the preceding claims, wherein the group third party entangled particles is formed in a process that includes the steps of: by forming a first pair of entangled particles; a forming a second pair of entangled particles; and, entangling the particles from the first and second pairs.

# Figure 1(prior art)

Party 1

Result - one of:
$|b_0>, |b_1>, |b_2>$ or $|b_3>$
with equal probability

Result communicated through
normal communication channels

$|\psi> \otimes |A>$

State $|\psi>$ → Mix → BSM

Control

$|\psi>$

EPR → Rotate $|\psi>$ → Detect

Entangled particles = state $|A>$

Party 2

*EPR = Einstein-Podolsky-Rosen (Entangled state creation mechanism)
BSM = Bell State Measurement

EP 1 919 122 A1

PRIOR ART Teleportation

# Figure 2

EP 1 919 122 A1

# Figure 2a

# Figure 3

| Step | Party 1 | Party 3 | Party 2 |
|------|---------|---------|---------|
| $T= T_0$ | | EPR$_1$  $|N_1>$  $|N_2>$  EPR$_2$ | |
| $T= T_1$ | | Mix  $|N_T>$ | |
| $T= T_2$ | $|\psi>$  Mix | | $|\varphi>$  Mix |
| $T= T_3$ | BSM | BSM result announced | BSM |
| $T= T_4$ | Detect | | Detect |

EP 1 919 122 A1

# Figure 3a – T=T$_0$

| Step | Party 1 | Party 3 | Party 2 |
|---|---|---|---|
| T= T$_0$ | | EPR$_1$  $|N_1\rangle$   $|N_2\rangle$  EPR$_2$ | |
| | | Party 3 produces<br>two pairs of entangled particles | |

# Figure 3b – T=T₁

| Step | Party 1 | Party 3 | Party 2 |
|---|---|---|---|
| T= T₁ | | $|N_1>$  $|N_2>$ <br><br> Mix <br> $|N_T>$ | |
| | | These two states are mixed such that they create a new state $|N_T>$. | |

# Figure 3c – T=T$_2$

| Step | Party 1 | Party 3 | Party 2 |
|------|---------|---------|---------|
| | | $|N_T>$ | |
| T= T$_2$ | $|\psi>$ → Mix | | $|\varphi>$ → Mix |
| | | One particle that constitutes state $|N_T>$ is sent to party 1 and one is sent to party 2. | |

EP 1 919 122 A1

# Figure 3d – T=T₃

| Step | Party 1 | Party 3 | Party 2 |
|---|---|---|---|
| | $|\psi\rangle \otimes |N_T\rangle$ | | $|\varphi\rangle \otimes |N_T\rangle$ |
| T= T₃ | BSM | BSM result announced | BSM |
| | | Each party uses the two particles under their control to perform a Bell State Measurement result will be: $|b_0\rangle, |b_1\rangle, |b_2\rangle, |b_3\rangle$ (with equal probability)<br><br>Each party announces result openly to all parties | |

EP 1 919 122 A1

# Figure 3e – T=T$_4$

| Step | Party 1 | Party 3 | Party 2 |
|------|---------|---------|---------|
| | | Referee announces composite initial entangled states | |
| | | $|N_T>$ | |
| T= T$_4$ | Detect | Each party makes a normal measurement their received particle | Detect |

EP 1 919 122 A1

EP 1 919 122 A1

Figure 4

76a 76 76b 53

10

Alice detector 54
55

Polarisation filter
λ₂

82

Alice Photon Source
46

|ψ⟩

|ψ⟩ ⊗ |Nᴛ⟩     58    60

λₐ

D 62     BSM

80

50/50 Beam splitter   22  24
Photon source   18   20
λ₂ |N₁⟩   34  28  32   42
λ₁
|Nᴛ⟩   48
λₐ   Wavelength Conversion - If inputs have identical polarisation
λ₁   63   λ₅ⁱⁱ   D 64
Wavelength Conversion - If inputs have orthogonal polarisation

16  26
λ₃ |N₂⟩   30
λ₄
Down-conversion (BBO type I)
Wavelength-selective Beam splitter   36
λ₃   40
λ₃   33   44
|φ⟩ ⊗ |Nᴛ⟩   60   68   72   λ₆ⁱⁱ   D
λᵦ
52   λ₃

|φ⟩   50
Bob Photon Source

λᵢ₆   70   BSM   74   14

Polarisation filter   78a 78b 78
λ₄   57
D   51
56
Bob detector

84
28

# Figure 5

EP 1 919 122 A1

T0 — Third party creates two pairs of entangled particles

T1 {
These states are quantum mechanically mixed to form larger entangled state

One particle from this state is sent to each party
}

T2 — Each party mixes their state with the particle received

T3 {
A Bell State Measurement is performed by each party

Both measurement results are declared openly, and possibly validated independently
}

T4 — Third party declares the initial states of entangled particles

T5 — Each party makes standard measurement of their own (remaining) particle

T6 — Each party performs calculation to determine received information

T7 — Predetermined number of iterations completed ? — No

Yes

STOP

# Fig 5a – Calculation Process (example for Party 1)

EP 1 919 122 A1

## Figure 5b

```
┌─────────────────────────────────────────────────────────────────────────┐
│           Third party creates two pairs of entangled particles            │◄──┐
└─────────────────────────────────────────────────────────────────────────┘   │
                                    ▼                                           │
┌─────────────────────────────────────────────────────────────────────────┐   │
│    These states are quantum mechanically mixed to form larger entangled state │
└─────────────────────────────────────────────────────────────────────────┘   │
                                    ▼                                           │
┌─────────────────────────────────────────────────────────────────────────┐   │
│              One particle from this state is sent to each party            │   │
└─────────────────────────────────────────────────────────────────────────┘   │
                                    ▼                                           │
┌─────────────────────────────────────────────────────────────────────────┐   │
│           Each party mixes their state with the particle received          │   │
└─────────────────────────────────────────────────────────────────────────┘   │
                                    ▼                                           │
┌─────────────────────────────────────────────────────────────────────────┐   │
│              A Bell State Measurement is performed by each party           │   │
└─────────────────────────────────────────────────────────────────────────┘   │
                                    ▼                                           │
┌─────────────────────────────────────────────────────────────────────────┐   │
│   Both measurement results are declared openly, and possibly validated independently │
└─────────────────────────────────────────────────────────────────────────┘   │
                                    ▼                                           │
┌─────────────────────────────────────────────────────────────────────────┐   │
│       Third party releases second pair of entangled particles to each party │
└─────────────────────────────────────────────────────────────────────────┘   │
                                    ▼                                           │
┌─────────────────────────────────────────────────────────────────────────┐   │
│          Third party declares the initial states of entangled particles    │   │
└─────────────────────────────────────────────────────────────────────────┘   │
                                    ▼                                           │
┌─────────────────────────────────────────────────────────────────────────┐   │
│     Each party makes standard measurement of their own (remaining) particle │
└─────────────────────────────────────────────────────────────────────────┘   │
                                    ▼                                           │
                            ◇ Predetermined number of iterations      No        │
                            ◇       completed ?            ◇──────────────────────┘
                                    │ Yes
                                    ▼
┌─────────────────────────────────────────────────────────────────────────┐
│        Each party performs calculation to determine received information    │
└─────────────────────────────────────────────────────────────────────────┘
                                    ▼
┌─────────────────────────────────────────────────────────────────────────┐
│                                  STOP                                      │
└─────────────────────────────────────────────────────────────────────────┘
```

EP 1 919 122 A1

# Figure 6 – Simulated Result 1
## $a = 0.7$, $c = 0.3$

# Figure 7 – Simulated Result 2
## $a$= 0.1, $c$= 0.2

EP 1 919 122 A1

Figure 8 – Simulated Result 3

$a = 0.54$, $c = 0.58$

**European Patent Office**

## EUROPEAN SEARCH REPORT

Application Number

EP 06 25 5597

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER V. SERGIENKO: "Quantum Communications and Cryptography Chapter 2 and 3" 14 November 2005 (2005-11-14), CRC PRESS , XP002431521 * paragraph [2.5.3] * * paragraph [03.2] * ----- | 1-10 | INV. H04L9/08 |
| A | GB 2 379 847 A (TOSHIBA RES EUROP LTD [GB]) 19 March 2003 (2003-03-19) * figures 5-7a,11-14 * * page 28, line 1 - page 32, last line * * page 37, line 3 - page 40, line 12 * ----- | 1-10 | |
| A | GB 2 405 294 A (TOSHIBA RES EUROP LTD [GB]) 23 February 2005 (2005-02-23) * figure 6 * * page 22, line 30 - page 25, last line * ----- | 1-10 | |
| E | EP 1 768 301 A (MITSUBISHI ELECTRIC CORP [JP]) 28 March 2007 (2007-03-28) * paragraph [0118] - paragraph [0150] * ----- | 1-10 | **TECHNICAL FIELDS SEARCHED (IPC)** H04L H04B G06N |

The present search report has been drawn up for all claims

| Place of search | Date of completion of the search | Examiner |
|---|---|---|
| Munich | 2 May 2007 | Bec, Thierry |

**ANNEX TO THE EUROPEAN SEARCH REPORT
ON EUROPEAN PATENT APPLICATION NO.**

EP 06 25 5597

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2007

| Patent document cited in search report | | Publication date | Patent family member(s) | | Publication date |
|---|---|---|---|---|---|
| GB 2379847 | A | 19-03-2003 | GB | 2368502 A | 01-05-2002 |
| | | | GB | 2379846 A | 19-03-2003 |
| | | | US | 2002097874 A1 | 25-07-2002 |
| GB 2405294 | A | 23-02-2005 | GB | 2419264 A | 19-04-2006 |
| | | | US | 2005100351 A1 | 12-05-2005 |
| EP 1768301 | A | 28-03-2007 | WO | 2006003715 A1 | 12-01-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LLOYD ; M. S. SHAHRIAR ; J. H. SHAPIRO ; P. R. HEMMER.** Long Distance, Unconditional Teleportation of Atomic States via Complete Bell State Measurements. *Physical Review Letters,* October 2001, vol. 87 (16
- **Y-H. KIM ; S. P. KULIK ; Y. SHIH.** Quantum Teleportation with Complete Bell State Measurement. *Physical Review Letters,* 07 February 2001, vol. 86

- **KWIAT, P. G. et al.** New high intensity source of polarization-entangled photon pairs. *Phys. Rev.,* 1995, vol. 75, 4337-4341
- **DIK BOUWMEESTER ; JIAN-WEI PAN ; KLAUS MATTLE ; MANFRED EIBL ; HARALD WEINFURTER ; ANTON ZEILINGER.** Experimental Quantum Teleportation. *Nature,* 11 December 1997, vol. 390